# EUROPEAN PATENT SPECIFICATION

(11) **EP 3 336 150 B1**
(45) Date of publication and mention of the grant of the patent: **21.08.2019**
(21) Application number: 17205300.1
(22) Date of filing: 04.12.2017
(51) Int. Cl.: C09D 11/101, C09D 11/104, C09D 11/03, C09D 11/037

(54) **INK COMPOSITION AND METHOD OF PRINTING**
TINTENZUSAMMENSETZUNG UND VERFAHREN ZUM DRUCKEN
COMPOSITION D'ENCRE ET PROCÉDÉ D'IMPRESSION

(30) Priority: 13.12.2016 US 201615377881
(43) Date of publication of application: 20.06.2018
(73) Proprietor: Xerox Corporation, Rochester, NY 14644 (US)
(72) Inventor: BIRAU, Mihaela Maria, Hamilton, Ontario L9C 5J6 (CA); BRETON, Marcel P., Mississauga, Ontario, L5K 2S6 (CA); SACRIPANTE, Guerino, Oakville, Ontario L6H 4T7 (CA); MAGDALINIS, Aurelian Valeriu, Newmarket, Ontario, L3X 2X3 (CA); LEE, Jonathan Siu-Chung, Oakville,, Ontario L6H 4K4 (CA); ABRAHAM, Biby Esther, Mississauga,, Ontario L5M 7E2 (CA); GAGNON, Yvan, Mississauga, Ontario, L5L 1K2 (CA); MANABOTULA, Teja, Vancouver, British Columbia, V5P 2L7 (CA)
(74) Representative: Gill Jennings & Every LLP

(56) References cited:
- WO-A1-2007/032485
- WO-A1-2013/019821
- US-A1- 2015 077 501

## Description

### DETAILED DESCRIPTION

### Field of the Disclosure

The present disclosure is directed to radiation curable ink compositions comprising a polyester resin additive. The ink compositions can be employed, for example, in digital offset printing processes.

### Background

Ink-based digital printing employs a digital offset printing system, also known as a digital advanced lithographic imaging ("DALI") system. The DALI system is configured for lithographic printing using lithographic inks to form images based on digital image data, which may be variable from one image to the next. In other words, variable image data is used for producing images on a substrate that are changeable with each subsequent rendering of an image on the substrate in an image forming process.

For example, a digital offset printing process may include transferring radiation-curable ink onto a portion of an imaging member, such as an imaging cylinder or printing plate, that has been coated with a dampening fluid. Regions of the dampening fluid are selectively removed by exposure to a focused radiation source (e.g., a laser light source) to form pockets. In this manner a temporary pattern in the dampening fluid is formed over the imaging member. Ink is then applied to the imaging member and is retained in the pockets to form an ink image. The inked surface is then brought into contact with a substrate and the ink image transfers from the imaging member to the substrate. The dampening fluid may then be removed from the imaging member, a new uniform layer of dampening fluid is applied and the process repeated.

Digital offset printing inks differ from conventional inks because they are designed to meet demanding rheological specifications imposed by the lithographic printing process while being compatible with system component materials and meeting the functional requirements of sub-system components, including wetting and transfer. White inks, in particular, have very high pigment concentrations so as to achieve a relatively high opacity. In addition, white ink applications often demand thicker ink layers for covering relatively large areas compared to color inks. The thicker the ink layer the harder it is to get good ink transfer between the anilox roller, imaging member and final substrate. These differences can make meeting the demanding rheological specifications of white inks more difficult than for color inks.

There is some knowledge in the art that higher viscosity can be employed to improve transfer to a print substrate. For example, it is known in the art that jettable inks can be dried on a hot blanket to increase viscosity and facilitate transfer to a print substrate, as disclosed for example, at http://www.landanano.com.

Therefore, there remains a need for novel digital advanced lithography imaging inks that have increased viscosity latitude to enable improved ink transfer during printing.

### SUMMARY

An embodiment of the present disclosure is directed to a white ink composition. The white ink composition comprises an ink vehicle comprising at least one compound chosen from acrylate monomers, methacrylate monomers, acrylate oligomers and methacrylate oligomers; at least one polyester resin that exhibits a crystalline structure at temperatures at or below a recrystallization temperature and that has a melting temperature below 120°C; at least one photoinitiator; a filler comprising at least one component chosen from clay fillers and silica fillers; and at least one white colorant.

Another embodiment of the present disclosure is directed to a method for variable lithographic printing. The method comprises applying a dampening fluid to an imaging member surface. A latent image is formed by removing the dampening fluid from selective locations on the imaging member surface to form hydrophobic non-image areas and hydrophilic image areas. The latent image is developed by applying a white ink composition to the hydrophilic image areas and the developed latent image is transferred to a receiving substrate. The white ink composition comprises an ink vehicle comprising at least one compound chosen from acrylate monomers, methacrylate monomers, acrylate oligomers and methacrylate oligomers; at least one polyester resin that exhibits a crystalline structure at temperatures at or below a recrystallization temperature and that has a melting temperature below 120°C; at least one photoinitiator; a filler comprising at least one component chosen from clay fillers and silica fillers; and at least one white colorant.

The white inks of the present disclosure can provide one or more of the following advantages: the ink can be compatible with materials it is in contact with, including, for example, an imaging member, fountain solution, and other cured or non-cured inks; the inks can meet functional specifications of the sub-systems, including providing suitable wetting and transfer properties; the imaged inks can be transferred from anilox rollers to an imaging medium and from the imaging medium to the final substrate; the ink can both wet the blanket material homogeneously and transfer from the blanket to the substrate; the ink can provide for efficient transfer of the image layer, such as transfer of 90% of the image layer by weight; the ink can reduce or prevent ghost images appearing in subsequent prints; the ink can have relatively low odor and/or low migration components; the ink can be appropriate for potential food contact (direct or indirect); the ink can provide for suitable viscosity characteristics that aid in transfer of the ink; the ink can exhibit phase change between a liquid and a crystalline state at the working temperatures of the printing apparatus; the inks can show improved transfer properties and/or L* compared to inks that are otherwise the same but do not have the polyester resin additives of the present disclosure.

It is to be understood that both the foregoing general description and the following detailed description are exemplary and explanatory only and are not restrictive of the present teachings, as claimed.

### BRIEF DESCRIPTION OF THE DRAWINGS

The accompanying drawings, which are incorporated in and constitute a part of this specification, illustrates embodiments of the present teachings and together with the description, serve to explain the principles of the present teachings.
FIG. 1 shows an example of a system for digital advanced lithographic imaging that can be used to print the white inks of the present disclosure.
FIG. 2 shows a graph of DSC data for a crystalline polyester resin of Example 1.

It should be noted that some details of the figure have been simplified and are drawn to facilitate understanding of the embodiments rather than to maintain strict structural accuracy, detail, and scale.

### DESCRIPTION OF THE EMBODIMENTS

Reference will now be made in detail to embodiments of the present teachings, examples of which are illustrated in the accompanying drawings. In the drawings, like reference numerals have been used throughout to designate identical elements. In the following description, reference is made to the accompanying drawing that forms a part thereof, and in which is shown by way of illustration a specific exemplary embodiment in which the present teachings may be practiced. The following description is, therefore, merely exemplary.

An embodiment of the present disclosure is directed to a white ink composition. The white ink composition includes at least one polyester resin that exhibits a crystalline structure at temperatures at or below a recrystallization temperature. The composition further comprises an ink vehicle, at least one photoinitiator, a filler comprising at least one component chosen from clay fillers and silica fillers; and at least one white colorant. The ink vehicle comprising at least one compound chosen from acrylate monomers, methacrylate monomers, acrylate oligomers and methacrylate oligomers.

### Polyester Resin

The polyester resins of the present disclosure are phase change agents that act as viscosity modifiers for controlling the rheology of the ink. The polyester resins are capable of undergoing a phase change within the workable temperatures of the printing process. At relatively high temperatures, above a melting temperature of the polyester resin, the polyester resin exhibits relatively low viscosities. At lower temperatures, the polyester resin exhibits a crystalline state having relatively high viscosities, and may sometimes be referred to as a crystalline polyester or crystalline polyester resin herein. Due at least in part to the ability of the polyester resin to change phase, the polyester resin is able to significantly modify the viscosity of the ink.

The crystalline structure of the polyester resin occurs at temperatures at or below the recrystallization temperature of the polyester resin. The structure of the polyester resin can be modified to vary both its recrystallization temperature and melting temperature, depending on the temperatures employed in the printing process. As an example, recrystallization temperatures of the polyester resin can range from about 5°C to about 70°C, such as about 18°C to about 60°C, or about 25°C to about 50°C.

Any suitable polyester resin can be employed that can change phase from a liquid to crystalline state and thereby modify ink rheology as desired, and be otherwise compatible with the ink and printing process. In an embodiment, the polyester resin is a copolymer of one or more diacid monomers and one or more diol monomers. Diacids can be any suitable substituted or unsubstituted, linear, branched or cyclic diacid having 2 to 20 carbon atoms that is suitable for making a polyester resin having the desired viscosity enhancing characteristics. Examples of suitable diacids include dicarboxylic acids having the general formula 1: 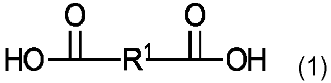 where R¹ is a substituted or unsubstituted, linear, branched or cyclic alkyl having 2 to 12 carbon atoms, such as 2 to 10 carbon atoms, or 3 to 8 carbon atoms. In an embodiment, R¹ is a linear alkyl, such as n-propyl, n-butyl, n-pentyl, or n-hexyl. Diol monomers can be chosen from any suitable substituted or unsubstituted, linear, branched or cyclic diols having 2 to 20 carbon atoms. Examples of suitable diols can be represented by the general formula 2:

HO-R²-OH (2)

where R² is a substituted or unsubstituted, linear, branched or cyclic alkyl having 2 to 12 carbon atoms, such as 3 to 9 carbon atoms or 3 to 6 carbon atoms. In an embodiment, R² is a linear alkyl, such as n-propyl or n-butyl.

The melting point and recrystallization temperature of the polyester can be modified by selecting different R¹ groups for the diacid of formula (1) and R² groups for the diol of formula (2). Table 1 shows various example polyesters, where the CPE values show the number of methylene units in the R¹ and R² groups of formulae 1 and 2 above, the first number being the number of methylene units for R¹ and the second number being the number of methylene units for R². For instance, in Example 1 of table 1, the CPE 10:9 means that the diacid has R¹ = 10 methylene units, and the diol has R² = 9 methylene units.

**Table 1. Properties of Polyester resins**

| Resin | Type Diacid:Diol | Melting point (DSC) °C | Recrystalization Temperature DSC (°C) | Acid Value (mg KOH/g) | Mn/Mw/1000 |
|---|---|---|---|---|---|
| Example 1 | CPE 10:9 | 76.1 | 58.8 | 10.6 | 10.4/ 22.9 |
| Example 2 | CPE 10:6 | 76.1 | 58.8 | 10.4 | 10.4/ 20.7 |
| Example 3 | CPE 8:6 | 71.5 | 50.4 | 8.95 | 9.6/ 22.8 |
| Example 4 | CPE 8:4 | 66.5 | 44.4 | 11.4 | 6.8/ 21.2 |
| Example 5 | CPE 6:6 | 61.2 | 43.4 | 12.0 | 2.3/ 4.1 |
| Example 6 | CPE 6:4 | 56.5 | 32.2 | 9.05 | 8.9/ 19.6 |
| Example 7 | CPE 10:4 | 73.6 | 59.0 | 16.3 | 7.8/ 20.1 |

The diols and diacids can be substituted with any suitable substituents that will allow formation of a polyester resin having the desired phase change and other viscosity enhancing properties. Examples of such substituents include sulfur and oxygen containing functional groups, such as sulfonyl groups, sulfoxyl groups, -SO₃H and -SO₃M, where M is hydrogen or an alkali metal such as lithium or sodium. The ratio of the diacid to diol used to form the polyester is usually about 1:1. For example, the ratio can vary from about 100:95 to about 95:100.

In addition to the diols and diacids, one or more additional monomers can be employed to make the polyester resins. Any suitable additional monomers that will allow formation of a polyester resin having the desired phase change and other viscosity enhancing properties can be employed. Examples of such monomers include carbinol terminated polydimethylsiloxanes, such as: 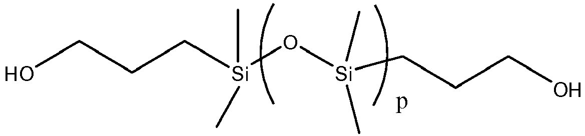 where p is an integer of from about 10 to about 1,000.

Example polyester resins that are suitable as viscosity modifiers can have a general structure of Formulae 3 or 4: 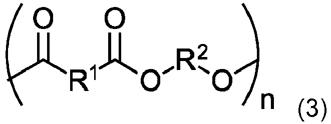 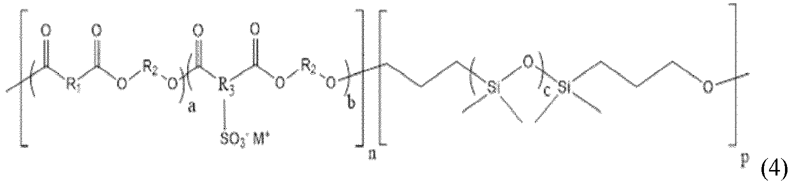 where M is a hydrogen or alkali metal such as lithium or sodium, R₁ and R₃ are independently selected from the group consisting of aryl and alkyl; R₂ is independently selected from the group consisting of alkyl and oxyalkylene, and wherein n and p represent random segments of the polymer; and a, b, c, n and p are each integers ranging in value from about 10 to about 100,000 or more.

Any suitable amount of the polyester resin can be employed that provides the desired viscosity characteristics to the ink formulation. Example amounts include concentrations ranging from about 1 weight % to about 15 weight %, such as about 1.5 weight % to about 10 weight %, or about 2 weight % to about 6 weight %, relative to the total weight of the ink composition. Mixtures of two or more different polyester compounds can also be employed to provide the desired rheology properties at desired print temperatures. For example, two, three or more of any of the compounds of Table 1 can be employed.

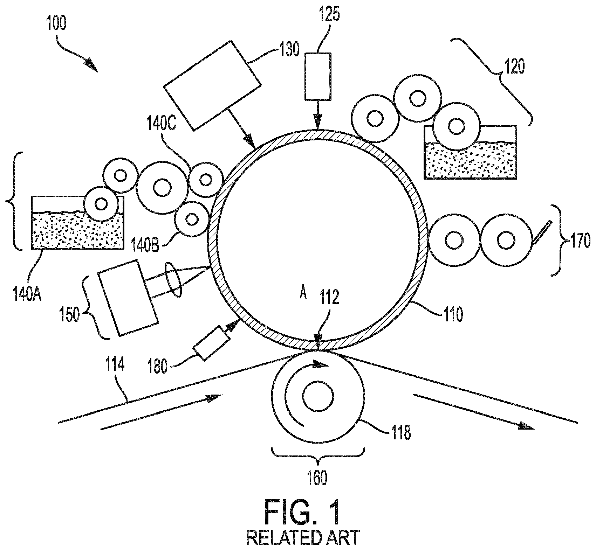

The polyester resin viscosity modifiers can be formulated to achieve relatively low ink viscosity at a first temperature and relatively high ink viscosity at second temperature, where the first temperature is higher than the second temperature. For example, the ink has relatively low viscosity within a temperature range of about 45 to about 80 °C, such as from about 50 to about 70 °C, such as from about 55 to about 65 °C, such as about 60 °C, at shear rates corresponding to the equivalent angular frequencies from about 50 to about 200 rad/s such as about 100 rad/s. The relatively low viscosity under these conditions is suitable for ink delivery from the ink reservoirs to the anilox rolls in the inker 140 (illustrated in FIG. 1). Example viscosity values include ranges of from about 1,000 cPs to about 50,000 cPs, such as about 5,000 cPS to about 30,000 cPs, or about 8,000 cPs to about 20,000 cPs, where the viscosity for these ranges is measured at 60°C and a shear rate of 100 rad/s. At lower temperatures, the ink has relatively high viscosity. For example, significantly higher viscosities can be achieved within a temperature range of about 10 to about 30 °C, such as from about 18 to about 25 °C, such as about 18 °C, at shear rates corresponding to the equivalent angular frequencies from about 0.5 to about 2 rad/s such as about 1 rad/s. Maintaining the set point temperature of the imaging member 110 (FIG. 1) at these lower temperatures can increase the viscosity of the ink and thereby aid in ink transfer from the imaging member to the final substrate. Examples of the relatively high viscosity exhibited by the ink at the low temperature include viscosity values of from about 3,000 cPs to about 3,000,000 cPs, such as about 10,000 cPS to about 2,500,000 cPs, or about 100,000 cPs to about 2,500,000 cPs, or about 1,000,000 cPs to about 2,500,000 cPS, where the viscosity is measured at 25°C and a shear rate of 1 rad/s.

The ability of the ink to exhibit a change in viscosity with change in temperature can help ensure a high degree of ink transfer from the anilox roller to the imaging member. In particular, the relatively low viscosity at higher temperatures and relatively high shear rate may allow more uniform loading of ink from the ink reservoir 140A to the anilox rollers 140B and 140C, illustrated in FIG. 1, while the relatively high viscosity at lower temperatures and relatively low shear rate may allow improved take-up of ink from the anilox rollers 140B, 140C to the reimageable surface of imaging member 110, thereby resulting in improved imaging density uniformity, improved printed dot circularity and/or improved transfer from the imaging member to the receiving substrate 114.

In an embodiment, the target melting point of the polyester resin can be a few degrees (e.g., 1 to 10°C, or 2 to 5°C) below the imaging temperature. The target melting point of the resin can be higher if the resin is plasticized with some of the ink monomers. As an example, if the imaging temperature is set at about 60°C, then an example target melting temperature can be about 50°C to about 58°C. For purposes of the present disclosure, the imaging temperature is a set point temperature of the last anilox roll of the inker unit 140 that is in contact with the imaging member (e.g., anilox roll 140B in FIG. 1). In an embodiment, the polyester resin has a melting point below 120°C, such as a melting point ranging from about 40°C to about 100°C, such as about 45°C to about 85°C, or about 50°C to about 80°C.

### Ink Vehicle

The ink vehicle employed in the compositions of the present disclosure can include at least one compound chosen from acrylate monomers, methacrylate monomers, acrylate oligomers and methacrylate oligomers. In an embodiment, the ink vehicle comprises both at least one acrylate or methacrylate monomer and at least one acrylate or methacrylate oligomer. The use of oligomers can allow for a faster cross-linking of the ink. The oligomer to monomer ratio can be adjusted to provide a desired balance between cross-linking rate and viscosity. In an embodiment, the ink is not miscible with water.

Any suitable acrylate and methacrylate monomers can be employed, including mono- or multi-functional acrylate monomers, mono- or multi-functional methacrylate monomers, or a combination thereof. Exemplary acrylate monomers may include polyester acrylates, Trimethylolpropane triacrylates, propoxylated trimethylolpropane triacrylates, pentaerythritol triacrylates, ethoxylated trimethylolpropane triacrylates and glycerol derivative triacrylate (e.g., EBECRYL 5500 from Allnex). Other triacrylates, monoacrylates, diacrylates, tetraacrylates, pentaacrylates, hexaacrylates and higher functional acrylate monomers, and various combinations thereof, can also be used in the ink compositions as vehicles.

Examples of suitable commercially available polyester acrylate monomers include Sartomer CN294E, Sartomer CD-501, Sartomer CN9014, Sartomer CN2282 and Sartomer CN2256, as well as EBECRYL 853, which is a low viscosity polyester triacrylate having a specific gravity of 1.10 g/cm³, an APHA Color of 200 and a viscosity of 80 cps at 25°C. These polyester acrylate monomers are different than the crystalline polyester viscosity modifiers discussed herein. Examples of suitable commercially available Trimethylolpropane triacrylate monomers include SR-492, SR-501, SR-444, SR-454, SR-499, SR-502, SR-9035 and SR-415 from Sartomer; and EBECRYL 853 and EBECRYL 5500 from Allnex. Trimethylolpropane triacrylate has a refractive index of 1.474, a specific gravity of 1.06 g/cm³, an APHA Color of less than 300 and a viscosity range of 80 to 120 cps at 25°C. Sartomer SR-492 is a three mole propoxylated trimethylolpropane triacrylate and has a refractive index of 1.459, a specific gravity of 1.05 g/cm³, a Tg of -15°C, an APHA Color of 30 and a viscosity of 90 cps at 25°C. Sartomer SR-501 is a six mole propoxylated trimethylolpropane triacrylate and has a refractive index of 1.4567, a specific gravity of 1.048 g/cm³, a Tg of -2°C, an APHA Color of 90 and a viscosity of 125 cps at 25°C. Examples of suitable commercially available pentaerythritol triacrylate include Sartomer SR-444, which has a refractive index of 1.4801, a specific gravity of 1.162 g/cm³, a Tg of 103°C, an APHA Color of 50 and a viscosity of 520 cps at 25°C. Examples of suitable commercially available ethoxylated trimethylolpropane triacrylate include Sartomer SR-454, which is a three mole ethoxylated trimethylolpropane triacrylate and has a refractive index of 1.4689, a specific gravity of 1.103 g/cm³, a Tg of 120°C, an APHA Color of 55 and a viscosity of 60 cps at 25°C; Sartomer SR-499, which is a six mole ethoxylated trimethylolpropane triacrylate and has a refractive index of 1.4691, a specific gravity of 1.106 g/cm³, a Tg of -8°C, an APHA Color of 50 and a viscosity of 85 cps at 25°C; Sartomer SR-502, which is a nine mole ethoxylated trimethylolpropane triacrylate and has a refractive index of 1.4691, a specific gravity of 1.11 g/cm³, a Tg of -19°C, an APHA Color of 140 and a viscosity of 130 cps at 25°C; Sartomer SR-9035, which is a fifteen mole ethoxylated trimethylolpropane triacrylate and has a refractive index of 1.4695, a specific gravity of 1.113 g/cm³, a Tg of -32°C, an APHA Color of 60 and a viscosity of 168 cps at 25°C; Sartomer SR-415, which is a twenty mole ethoxylated trimethylolpropane triacrylate and has a refractive index of 1.4699, a specific gravity of 1.115 g/cm³, a Tg of -40°C, an APHA Color of 55 and a viscosity of 225 cps at 25°C. An example of a suitable commercially available glycol derivatized triacrylate is EBECRYL 5500, which is a low viscosity glycerol derivative triacrylate having a specific gravity of 1.07 g/cm³, an APHA Color of 62 and a viscosity of 130 cps at 25°C.

Curable acrylate oligomers which can be used in the ink compositions as vehicles may include polyester acrylate oligomers, such as difunctional polyester acrylate oligomers, trifunctional polyester acrylate oligomers and tetrafunctional polyester acrylate oligomers; acrylated urethane oligomers, such as difunctional acrylated urethane oligomers, trifunctional urethane acrylate oligomers and tetrafunctional urethane acrylate oligomers; and aliphatic acrylate ester oligomers.

Examples of commercially available acrylate oligomers include Sartomer CN294E; CN2256; CN2282; CN9014 and CN309. Sartomer CN294E is a tetrafunctional acrylated polyester oligomer that is a clear liquid having a specific gravity of 0.93 and a viscosity of 4,000 cps at 60°C. Sartomer CN2256 is a difunctional polyester acrylate oligomer and has a refractive index of 1.5062, a Tg of -22°C, a tensile strength of 675 psi, and a viscosity of 11,000 cps at 60°C. Sartomer CN2282 is tetrafunctional acrylated polyester and is a clear liquid having a specific gravity of 1.15 and a viscosity of 2,500 cps at 60°C. Sartomer CN9014 is a difunctional acrylated urethane and is a non-clear liquid having a specific gravity of 0.93 and a viscosity of 19,000 cps at 60°C. Sartomer CN309 is an oligomer containing an acrylate ester that derives from an aliphatic hydrophobic backbone, or in other words is an aliphatic acrylate ester. CN309 is a clear liquid having a specific gravity of 0.92, a density of 7.68 pounds/gallon, a surface tension of 26.3 dynes/cm, a viscosity of 150 cps at 25°C, and a viscosity of 40 cps at 60°C. Further examples of commercially available acrylate oligomers include EBECRYL 8405, EBECRYL 8411, EBECRYL 8413, EBECRYL 8465, EBECRYL 8701, EBECRYL 9260, EBECRYL 546, EBECRYL 657, EBECRYL 809, and the like from Allnex. EBECRYL 8405 is a tetrafunctional urethane acrylate diluted as 80% by weight in 1,6-Hexanediol diacrylate (HDDA) and is a clear liquid, having a Gardner Color of 2 and a viscosity of 4,000 cps at 60°C. EBECRYL 8411 is a difunctional urethane acrylate diluted as 80% by weight in isobornylacrylate (IBOA) and is a clear liquid, having a viscosity range of 3,400 to 9,500 cps at 65°C. EBECRYL 8413 is a difunctional urethane acrylate diluted as 67% by weight in IBOA and is a clear liquid having a viscosity of 35,000 cps at 60°C. EBECRYL 8465 is a trifunctional urethane acrylate that is a clear liquid having a Gardner Color of 2 and a viscosity of 21,000 cps at 60°C. EBECRYL 8701 is a trifunctional urethane acrylate that is a clear liquid having a Gardner Color of 2 and a viscosity of 4,500 cps at 60°C. EBECRYL 9260 is a trifunctional urethane acrylate that is a clear liquid having a Gardner Color of 2 and a viscosity of 4,000 cps at 60°C. EBECRYL 546 is a trifunctional polyester acrylate that is a clear liquid having a Gardner Color of 1.5 and a viscosity of 350,000 cps at 25°C. EBECRYL 657 is a tetrafunctional polyester acrylate that is a clear liquid having a Gardner Color of 4 and a viscosity of 125,000 cps at 25°C. EBECRYL 809 is a trifunctional polyester acrylate that is a clear liquid having a Gardner Color of 3 and a viscosity of 1,300 cps at 60°C.

The monomer and/or oligomer can be present in any suitable amount. In embodiments, the monomer, oligomer, or combination thereof is added in an amount of from about 10 to about 85%, or from about 30 to about 80%, or from about 50 to about 70%, by weight based on the total weight of the curable ink composition.

In an embodiment, the compositions of the present disclosure comprise at least one acrylate monomer and at least one acrylate oligomer. Any of the above acrylate monomers and oligomers can be employed. As an example, the acrylate monomer can be a propoxylated trimethylolpropane triacrylate monomer and the acrylate oligomer can be a tetrafunctional polyester acrylate oligomer.

In some embodiments, co-reactive monomers may be added to control polarity of the ink vehicle. Specific examples of such co-reactive monomers include, but are not limited to, the functional water soluble aromatic urethane acrylate compound (available from CYTEC as EBECRYL 2003), the di-functional compound polyethylene glycol diacrylate (available from CYTEC as EBECRYL 11), and the trifunctional compound polyether triacrylate (available from CYTEC as EBECRYL 12).

### Photoinitiators

Any suitable photoinitiator that is compatible with the white ink composition and that is suitable for polymerizing the particular oligomers and monomers being employed in the ink vehicle can be used. Photoinitiators can allow the inks to be radiation curable using a suitable radiation source, such as, for example, light in the ultraviolet spectrum. In an embodiment the photoinitiators are free-radical photoinitiators. Example photoinitiators include 2-dimethylamino-2-(4-methyl-benzyl)-1-(4-morpholino-4-yl-phenyl)=butan-1-one; 1-hydroxy-cyclohexyl-phenyl-ketone; bis(2,4,6-trimethylbenzoyl)-phenylphosphine oxide; and oligomeric alpha hydroxyketones, such as oligo[2-hydroxy-2-methyl-1-[4-(1-methylvinyl)phenyl]propanone].

Examples of such photoinitiators are commercially available as IRGACURE 379, IRGACURE 184 and IRGACURE 819, all available from Ciba Specialty Chemicals. IRGACURE 379 is 2-dimethylamino-2-(4-methyl-benzyl)-1-(4-morpholino-4-yl-phenyl)=butan-1-one, with a molecular weight of 380.5. IRGACURE 184 is 1-hydroxy-cyclohexyl-phenyl-ketone, having a molecular weight of 204.3. IRGACURE 819 is bis(2,4,6-trimethylbenzoyl)-phenylphosphine oxide, having a molecular weight of 418.5. An example of a commercially available oligomeric alpha hydroxyketone photoinitiator is Esacure KIP 150, available from Lamberti Technologies, which is oligo[2-hydroxy-2-methyl-1-[4-(1-methylvinyl)phenyl]propanone].

In an embodiment, a plurality of different photoinitiators, such as two, three or more photoinitiators, can be employed in a single ink composition. For example, two, three or four of any of the above described photoinitiators can be employed.

The total of all photoinitiator(s) may be present in an amount of from 1 to about 10 weight % of the ink composition, such as about 3 to about 8 weight %, or about 5 to about 7 weight %.

The particular photoinitiators employed can affect the color of the white ink. For example, many photoinitiators can cause unwanted coloration of the ink if used in too great an amount (e.g., the ink can turn a yellow color). As an example, employing all four of IRGACURE 379, IRGACURE 819, IRGACURE 184 AND ESACURE KIP 150 in the amounts shown in Table 3 allowed for a white ink to be formed, while using too much of any one of those four may cause unwanted discoloration. Further, it can be advantageous to choose a variety of photoinitiators to allow light absorption over a broader absorption range. Therefore, using multiple photoinitiators can provide advantages in white ink systems.

### Filler

Any filler that is suitable for adjusting the viscosity of the ink composition and is otherwise compatible with the printing process can be employed. Exemplary fillers include organic and inorganic clay and silica. Commercially available examples of such fillers are CLAYTONE HY, an organo clay available from Southern Clay Products, and silica-type materials such as AEROSIL 200 from Degussa. One or more different fillers can be used. For example, either clay or silica alone, or a combination of both, can be employed.

The total filler may be present in an amount of from about 0.2 to about 6 weight % of the ink composition, such as about 0.5 to about 4 weight %, or about 1 to about 2 weight %, based on the total weight of the ink composition.

The combination of the polyester resin viscosity modifiers of the present disclosure with the filler, such as clay, can allow suitable rheology for offset printing to be achieved at a range of high and low temperatures, as discussed herein. This polyester resin and filler combination can be particularly advantageous for white inks, which may employ large amounts of pigments and other solids that can make it difficult to achieve a suitable rheology for the ink.

### Colorants

In an embodiment, the colorant employed in the white inks of the present disclosure is chosen from one or more dyes, one or more pigments or mixtures of dyes and pigments. Any suitable dyes or pigment that provide the desired white coloration may be chosen, provided that they are capable of being dispersed or dissolved in the ink composition and are compatible with the other ink components. In an embodiment, pigments are employed. In certain embodiments, the colorant herein comprises one or more white pigments of varying degree of opacity including, for example, titanium dioxide pigments, lithopone pigments (for example, C.I. Pigment White 5), zinc oxide whites, which may or may not themselves be slightly colored, and other inorganic white pigments. In embodiments, the pigment herein is selected from the group consisting of titanium dioxide pigments, lithopone pigments, zinc oxide pigments, and combinations thereof.

In embodiments, the ink composition herein comprises a white pigment as a main colorant and, optionally, one or more additional pigments. In embodiments, the ink composition is a background ink, meaning an ink that when printed provides an ink layer, in embodiments a white ink layer, wherein an image can be printed on top of the white ink layer. In embodiments, the white ink background layer can be "opaque" (that is, the substrate does not show through) or "transparent" (that is, the substrate shows through the print layer). The opacity can be achieved by modifying the pigment loading in the ink or by printing several layers on top of each other. To achieve transparency, less pigment can be loaded in the ink or the ink rheology can be selected such as to allow a thinner layer on the substrate. In embodiments, the ink composition can contain two or more colorants comprising a selected ratio of high to low opacity colorants, in embodiments, a selected ratio of high to low opacity pigments.

In embodiments, one or more low opacity pigments can be selected. The low opacity pigment can be white or non-white. In embodiments, a non-white low opacity pigment can be combined with one or more additional colorants to provide a white ink composition (that is, an ink composition that prints a white image or layer).

In embodiments, the low opacity pigment is selected from the group consisting of brilliant white pigment Lithopone B301, Cobalt green, sometimes known as Rinman's green or Zinc Green, a translucent green pigment, and combinations thereof.

In embodiments, the high opacity pigment is selected from the group consisting of titanium dioxide pigments, natural titanium dioxide pigments, synthesized titanium dioxide pigments, and combinations thereof. Examples of suitable titanium dioxide pigments include TI-PURE® R706 and TI-PURE 6300, both of which are available from Dupont of Wilmington, Delaware.

The amount of pigments employed can be any amount suitable for white inks. As discussed above, white inks often employ a higher percentage of pigment than colored inks. Example pigment concentrations for the white inks of the present disclosure can range from about 40% to about 80% by weight, or about 45% to about 70% by weight, or about 55% to about 65% by weight, relative to the total weight of the ink composition.

### Optional Ingredients

The ink compositions of the present disclosure can include one or more optional additional ingredients. Examples of such optional ingredients include thermal stabilizers, in-can stabilizers and dispersants.

An exemplary thermal stabilizer is Sartomer CN3216, which is an acrylate stabilizing additive having a specific gravity of 1.113 at 25°C and a viscosity of 1,100 cP at 25°C. Other examples of stabilizers include sterically hindered nitroxyl radicals, such as those disclosed in US Patent Publication No. 2003/073762 or EP Patent Publication 1235863, the disclosure of both of which are hereby incorporated by reference in their entirety. Examples of typical radical scavenger that prevent the gelation of UV curable compositions while having minimal impact on curing speed are bis(1-oxy-2,2,6,6-tetramethylpiperidin-4-yl)sebacate (Irgastab® UV 10) and 4-hydroxy-1-oxy-2,2,6,6-tetramethylpiperidine. Still another stabilitzer composition includes a stabilizer blend of a sterically hindered nitroxyl radical and a quinone methide, as disclosed in US Patent No. 7,723,398, the disclosure of which is hereby incorporated by reference in its entirety.

One or a plurality of different thermal stabilizers can be used. The thermal stabilizer(s) may be present in any suitable amount. Example amounts include from about 0.1 to about 5 weight % of the ink composition, such as about 0.2 to about 3 weight % or about 0.4 to about 1 weight %.

The dispersant components may include any suitable or desired dispersant including, but not limited to AB-diblock copolymers of high molecular weight such as EFKA® 4340 available from BASF SE, and DISPERBYK® 2100 available from Byk-Chemie GmbH, or a mixture thereof. In a specific embodiment, the dispersant mixture comprises a cyclohexane dimethanol diacrylate (such as CD406® available from Sartomer USA, LLC) and at least one additional component, such as EFKA® 4340, which is a high molecular weight dispersing agent having an AB-diblock copolymer structure available from BASF SE. In an exemplary embodiment, the dispersant is a polymeric dispersant, such as SOLSPERSE® 39000, commercially available from The Lubrizol Corporation. Another commercially available dispersant is Ksperse XDA-504, available from King Industries of Norfolk, Connecticut.

The dispersant may be added in any suitable amount, such as, for example, from about 1% to about 20% by weight, or about 2% to about 10% by weight, or about 3 % to about 8% by weight, based on the weight of the composition. The amount of dispersant may vary depending on the amount of pigment used.

Any other ingredients suitable for use in phase change inks can also optionally be included in the compositions of the present disclosure. One of ordinary skill in the art would readily be able to determine other ingredients that can be employed.

The ink compositions of the present disclosure can be prepared by any desired or suitable method. Methods for combining the ingredients described herein to form ink compositions would be readily apparent to one of ordinary skill in the art.

### Method of Printing

The present disclosure is also directed to a printing method. The method is carried out on a system for variable lithography that employs the ink compositions described herein.

As shown in FIG. 1, an exemplary system 100 may include an imaging member 110. The imaging member 110 in the embodiment shown in FIG. 1 is a drum, but this exemplary depiction should not be interpreted so as to exclude embodiments wherein the imaging member 110 includes a plate, belt, or other known or later developed configuration. The imaging member has a reimageable surface that may be formed of materials that provide the desired properties for forming and releasing an ink image. Example materials include silicones such as polydimethylsiloxane (PDMS), fluorosilicones, and/or fluoropolymer elastomers such as VITON®. Other suitable materials may also be employed. In an embodiment, the reimageable surface may be formed of a relatively thin layer over a mounting layer, a thickness of the relatively thin layer being selected to balance printing or marking performance, durability and manufacturability.

The imaging member 110 is used to apply an ink image to an image receiving media substrate 114 at a transfer nip 112. The transfer nip 112 is formed by an impression roller 118, as part of an image transfer mechanism 160, exerting pressure in the direction of the imaging member 110. Image receiving medium substrate 114 can be any suitable medium onto which an ink image can be transferred, including, for example, paper, plastic, metal or composite sheet film. The exemplary system 100 may be used for producing images on a wide variety of image receiving media substrates. There is wide latitude of marking (printing) materials that may be used, including marking materials with pigment loading greater than 50% by weight. This disclosure will use the term ink to refer to a broad range of printing or marking materials to include those which are commonly understood to be inks, pigments, and other materials that may be applied by the exemplary system 100 to produce an output image on the image receiving media substrate 114.

The exemplary system 100 includes a dampening fluid system 120 generally comprising a series of rollers, which may be considered as dampening rollers or a dampening unit, for uniformly wetting the reimageable surface of the imaging member 110 with dampening fluid. A purpose of the dampening fluid system 120 is to deliver a layer of dampening fluid, generally having a uniform and controlled thickness, to the reimageable surface of the imaging member 110. Suitable dampening fluids are well known in the art and may comprise mainly water optionally with small amounts of isopropyl alcohol or ethanol added to reduce surface tension as well as to lower evaporation energy necessary to support subsequent laser patterning, as will be described in greater detail below. Small amounts of certain surfactants may optionally be added to the fountain solution as well. Alternatively, other suitable dampening fluids may be used to enhance the performance of ink based digital lithography systems. Exemplary dampening fluids include water, NOVEC® 7600 (1,1,1,2,3,3-Hexafluoro-4-(1,1,2,3,3,3-hexafluoropropoxy)pentane and has CAS#870778-34-0.), and D4 (octamethylcyclotetrasiloxane).

Once the dampening fluid is metered onto the reimageable surface of the imaging member 110, a thickness of the dampening fluid may be measured using a sensor 125. Sensor 125 may provide feedback to control the metering of the dampening fluid onto the reimageable surface of the imaging member 110 by the dampening fluid system 120.

After dampening fluid is applied to the reimageable surface of the imaging member 110, an optical patterning subsystem 130 may be used to selectively form a latent image in the uniform dampening fluid layer. Any suitable patterning techniques suitable for imaging the dampening fluid layer may be employed. One suitable example patterning process employs a laser to image the dampening fluid. The mechanics at work in the patterning process undertaken by the optical patterning subsystem 130 of the exemplary system 100 are known to those in the art. Briefly, the application of optical patterning energy from the optical patterning subsystem 130 results in selective removal of portions of the layer of dampening fluid to form hydrophobic non-image areas and hydrophilic image areas.

Following patterning of the dampening fluid layer on image member 110 by the optical patterning subsystem 130, the patterned layer is presented to an inker subsystem 140. The inker subsystem 140 is used to apply a uniform layer of ink over the layer of patterned dampening fluid. The inker unit 140 further comprises heated ink baths whose temperatures are regulated by a temperature control module (not shown). The inker subsystem 140 may use an anilox roller to meter the offset lithographic inks of the present disclosure onto one or more ink forming rollers that are in contact with the reimageable surface layer of the imaging member 110. Separately, the inker subsystem 140 may include other traditional elements such as a series of metering rollers to provide a precise feed rate of ink to the reimageable surface. The inker subsystem 140 may deposit the ink to the imaged portions of the reimageable surface at which the dampening fluid has been removed (sometimes referred to herein as "pockets"), while ink will not adhere to portions of the reimageable surface on which dampening fluid remains.

The cohesiveness and viscosity of the ink residing on the reimageable surface of the imaging member 110 can then be modified by cooling of the ink. The cooling can be accomplished by any suitable means, such as by employing one or more physical cooling mechanisms and/or via chemical cooling. An example of cooling by physical means includes convective cooling by blowing cool air over the reimageable surface, such as from one or more jets 180 after the ink composition has been applied to imaging member 110 but before the ink composition is transferred to the final substrate 114. Alternatively or in addition to cooling the ink by convection, the surface of the imaging member 110 can be directly cooled so as to maintain the reimageable surface at a desired temperature (e.g., 10 to 30°C) so as to cool the ink by conductive means. Any other suitable means can be employed for cooling the ink.

In addition to cooling the ink, any other suitable means can be employed to modify the cohesiveness and viscosity of the ink residing on the reimageable surface of the imaging member 110. Curing mechanisms may include optical or photo curing, heat curing, drying, or various forms of chemical curing. One such optional mechanism may involve the use of a rheology (complex viscoelastic modulus) control subsystem 150. The rheology control system 150 may form a partial crosslinking core of the ink on the reimageable surface to, for example, increase ink cohesive strength relative to the reimageable surface layer.

After cooling, the ink is transferred from the reimageable surface of the imaging member 110 to an image receiving medium substrate 114 using a transfer subsystem 160. The transfer occurs as the substrate 114 is passed through a nip 112 between the imaging member 110 and an impression roller 118 such that the ink within the pockets of the reimageable surface of the imaging member 110 is brought into physical contact with the substrate 114. The adhesion of the ink may be modified as the viscosity of the ink changes, such as during cooling of the ink or the partial UV curing using rheology control system 150. The modified adhesion of the ink causes the ink to adhere to the substrate 114 and to separate from the reimageable surface of the imaging member 110.

After transfer of the ink image to the substrate 114, an optional final cure can be performed. The final cure of the ink image on substrate 114 can be accomplished by any suitable method, such as by exposure of the ink image to ultraviolet light and/or heat.

In certain offset lithographic systems, an offset roller, not shown in FIG. 1, may first receive the ink image pattern from the imaging member 110 and then transfer the ink image pattern to the substrate 114, according to a indirect transfer method. Such offset rollers and indirect transfer techniques are well known in the art.

Following the transfer of the majority of the ink to the substrate 114, any residual ink and/or residual dampening fluid may be removed from the reimageable surface of the imaging member 110, preferably without scraping or significantly wearing that surface. An air knife (not shown) may be employed to remove residual dampening fluid. It is anticipated, however, that some amount of ink residue may remain. Removal of such remaining ink residue may be accomplished through use of some form of cleaning subsystem 170. In an embodiment, the cleaning subsystem 170 comprises at least a first cleaning member such as a sticky or tacky member in physical contact with the reimageable surface of the imaging member 110, the sticky or tacky member removing residual ink and any remaining small amounts of surfactant compounds from the dampening fluid of the reimageable surface of the imaging member 110. The sticky or tacky member may then be brought into contact with a smooth roller to which residual ink may be transferred from the sticky or tacky member, the ink being subsequently stripped from the smooth roller by, for example, and a doctor blade.

Any other suitable mechanisms can be employed by which cleaning of the reimageable surface of the imaging member 110 may be facilitated. Cleaning of the residual ink and dampening fluid from the reimageable surface of the imaging member 110 can reduce or prevent the formation of ghost images (also known as "ghosting") in the proposed system. Once cleaned, the reimageable surface of the imaging member 110 is again presented to the dampening fluid system 120 by which a fresh layer of dampening fluid is supplied to the reimageable surface of the imaging member 110, and the process is repeated.

It has been discovered that both the temperature and temperature difference between the reimageable surface of imaging member 110 and the temperature of the inker 140 are important variables with respect to image transfer. For example, heating of the inker unit to, for example 60 - 70°C, coupled with cooling of the central imaging cylinder 110 to 15 - 20°C can result in very efficient ink delivery and image transfer with little or no residual ink remaining on the reimageable surface. Using a heated inker unit can allow a greater difference to be achieved in ink rheology for the imaging and transfer step. It also results in the use of higher viscosity inks than what had been used previously, which was η ∼ 100,000 cps to η of about 200,000 cps or more, as measured at 25°C at a shear rate of 1 rad/sec.

Careful control of the temperature and pressure conditions at the transfer nip 112 can also aid in transfer of the ink image. As an example, transfer efficiencies for the ink from the reimageable surface of the imaging member 110 to the substrate 114 can be 90% by weight or more of the ink image, such as 95% by weight or more.

### EXAMPLES

### Example 1 - General Procedure for the preparation of the polyester resin ("Resin 1" with a CPE 6:4)

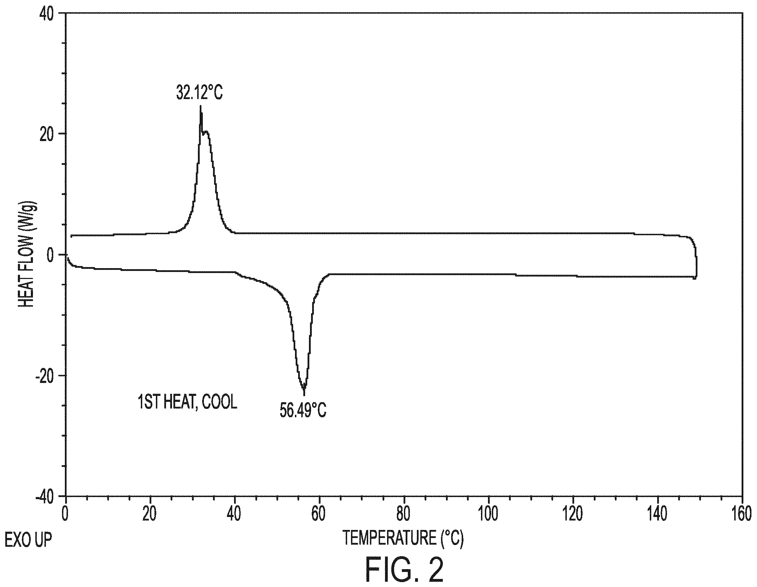

To a 2-LBuchi Reactor is added 646 grams of adipic acid, 397 g of butane-diol. The mixture is heated to 210°C over a 6 hour period and maintained for an additional 3 hours, followed by discharge and cooling of the resin. The resulting "Resin 1" is shown as Example 6 of Table 1, in which the thermal properties are listed. The properties for this crystalline polyester resin compound are also illustrated in FIG. 2, which shows DSC data taken using a 2 heat cycle to 150°C using 1 mg samples on a TA DSC Q1000 V9.9 Build 303 instrument. The melting point and recrystallization temperatures of Table 1 were also determined using this same DSC technique and apparatus.

Other crystalline resins were made using a similar procedure to that of Resin 1 above. Examples of such other crystalline resins are shown in Table 1, above. Typical Mw range can be selected from 1,000 to 50,000 g/mole. Mn range can be selected from 1,000 to 25,000 g/mole, and polydispersity from about 2 to 10. The melting point (Tₘ) can be selected from a range of 25 to 100°C, and the recrystallization temperature from about 25 or 30°C to about 60°C.

### Example 2 - General procedure for DALI ink preparation

Based on a 150 g total scale of preparation of the ink, the first set of ink base components (including the dispersant, monomer, oligomer, polyester resin (when used), thermal stabilizer and photoinitiators) were added in a 250 mL stainless steel vessel. The vessel was placed on a hotplate available from IKA® equipped with a thermocouple and stirrer apparatus also available from IKA® and with an anchor impeller. The components in the vessel were stirred at about 200 RPM for about 30 minutes at about 80 °C until the photoinitiators were molten and the mixture looked homogenous. Then the pigment and clay components were added slowly with stirring at about 80 °C which continued for about another 30 minutes. When the solids, pigment and clay were fully incorporated into the ink vehicle, the mixture was finally mixed for an hour at 1000 rpm also at 80 °C. The thoroughly mixed component mixture was then qualitatively transferred to a 3-roll mill apparatus manufactured by Kent Machine Works where the material composite paste was passed 3 times through the 3-roll mill. Tables 2 and 3 summarize the list of components in Comparative Example and Example inks' compositions by weight.

**Table 2 - List of Components for Comparative Example and Example Inks**

| **Ink formulation** | | |
|---|---|---|
| **Component** | | **Available from** |
| **Pigment** | Ti-Pure R706 | DuPont |
| **Dispersant** | KsperseXDA-504 | King Industries |
| **Oligomers** | CN294E | Sartomer Company |
| | CN9014 | Sartomer Company |
| **Monomer** | SR501 | Sartomer Company |
| **Photoinitiator** | IRGACURE 379 | BASF |
| | IRGACURE 819 | BASF |
| | ESACURE KIP 150 | Lamberti Technologies |
| | IRGACURE 184 | BASF |
| **Thermal stabilizer** | CN3216 | Sartomer Company |
| **Filler** | CLAYTONE HY | Southern Clay Products |
| **Polyester Resin** | GS-HK-12 | Proprietary to Xerox Corporation |

**Table 3 - Formulation of Components for Comparative Example and Example Inks**

| **Component (Wt%)** | | | | | | | |
|---|---|---|---|---|---|---|---|
| | **Example 1** | **Example 2** | **Example 3** | **Example 4** | **Example 5** | **Example 6** | **Example 7** |
| Ti-Pure R706 | 60 | 60 | 60 | 55.33 | 55.33 | 55.33 | 55.33 |
| Claytone HY | 1.33 | 1.33 | 0 | 1.67 | 1.67 | 0 | 1.67 |
| Ksperse XDA-504 | 5.33 | 5.33 | 5.33 | 6 | 6 | 6 | 6 |
| SR 501 | 3.33 | 3.33 | 3.33 | 3.33 | 3.33 | 3.33 | 3.33 |
| CN294E | 19.33 | 18.67 | 18.67 | 20.67 | 18.67 | 18.33 | 16.67 |
| CN9014 | 4.67 | 4.67 | 4.67 | 6.00 | 6.00 | 6.00 | 6.00 |
| Irgacure 379 | 1.67 | 1.67 | 1.67 | 2 | 2 | 2 | 2 |
| Irgacure 819 | 0.33 | 0.33 | 0.33 | 0.33 | 0.33 | 0.33 | 0.33 |
| Esacure KIP 150 | 2.67 | 2.67 | 2.67 | 3 | 3 | 3 | 3 |
| Irgacure 184 | 0.67 | 0.67 | 0.67 | 1 | 1 | 1 | 1 |
| CN3216 | 0.67 | 0.67 | 0.67 | 0.67 | 0.67 | 0.67 | 0.67 |
| Resin 1 | 0 | 0.67 | 2 | 0 | 2 | 4 | 4 |
| TOTAL | 100 | 100 | 100 | 100 | 100 | 100 | 100 |

### Example 3 - Rheology of Inks

The rheological properties of the radiation curable inks of the present disclosure were obtained on a Rheometric Scientific RFS-3 rheometer (TA Instruments) using a 25 mm parallel plate geometry as per following measurement protocol:

### Measurement protocol:

- Frequency sweeps performed between at 25 °C between 0.1 and 100 rad/s
- 25 mm plate
- Temperature sweeps at 1 rad/s from 60 to 18 °C

The complex viscosity profiles of the various inks were determined at 25 °C, a standard protocol used for DALI inks. The targeted rheology values for the inks containing polyester resin can be about 200,000 to about 1,000,000 mPa.s or more at 0.1 rad/s at 25 °C (where the transfer on the blanket occurs) and within range of 1000 to 30,000 mPa.s at 100 rad/s (where the anilox take-up happens). Table 3 below summarizes the viscosity characteristics at 60 °C, 100 rad/s and at 25 °C, 1 rad/s.

**Table 4 - Summary of Key Viscosity Metrics of Inks**

| **Ink Example#** | **Example 1** | **Example 2** | **Example 3** | **Example 4** | **Example 5** | **Example 6** | **Example 7** |
|---|---|---|---|---|---|---|---|
| **Pigment loading wt%** | 60 | 60 | 60 | 55.33 | 55.33 | 55.33 | 55.33 |
| **Resin 1 content wt%** | 0 | 0.67 | 2 | 0 | 2 | 4 | 4 |
| **Clay content wt%** | 1.33 | 1.33 | 0 | 1.67 | 1.67 | 0 | 1.67 |
| **Viscosity (mPa.s) at 60° C (100rad/s) for anilox take-up** | 9.03x10³ | 1.09x10⁴ | 8.58x10³ | 8.09x10³ | 1.21x10⁴ | 8.87x10³ | 1.54x10⁴ |
| **Viscosity (mPa.s) at 25 ° C (1rad/s) for blanket transfer** | 2.37x10⁵ | 1.34x10⁵ | 1.21x10⁶ | 2.35x10⁵ | 1.0x10⁶ | 2.1x10⁶ | 2.2x10⁶ |

Table 3 highlights the advantages of adding a polyester resin (Resin 1), which include a preferential and marked increase in the system viscosity of the inks of Examples 3, 5, 6 and 7 over the control inks of Examples 1 and 4 at 25 °C. Also, it is noted that 0.67 % by weight polyester resin, as used in the ink of Example 2, was too small amount of the particular polyester resin being used to significantly move the viscosity of the ink at 25°C in the desired direction. It is also observed that the viscosity at 60°C remains largely unaffected by the addition of the polyester resin. However the viscosity at 60 °C can be affected by the presence of clay. Removing the clay from the ink produces a drop in viscosity at 60°C that has been observed in the inks of Examples 3 and 6. Inks containing phase change agents, such as crystalline polyester resin components, can therefore be successfully formulated such as to afford inks with good flow characteristics at anilox take-up substation at 60°C with also higher viscosity during the transfer of ink from anilox roller to blanket and consequently at anilox to paper transfer step.

Example inks 1, 4, 5 and 7 of Table 3 were tested for ink transfer. The test method included printing each of the inks on a transparency and then, immediately after printing each ink, running a number of chase sheets (also transparencies) through the printer to pick up any residual ink on the intermediate transfer member. The number of chase sheets that picked up residual ink after each of the Example ink prints was determined and the results are shown in Table 4. The fewer the number of chase sheets the better the example ink transferred from the intermediate transfer member. L* was also determined for each ink.

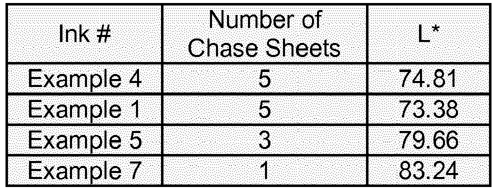

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

While the present teachings have been illustrated with respect to one or more implementations, alterations and/or modifications can be made to the illustrated examples without departing from the spirit and scope of the appended claims. In addition, while a particular feature of the present teachings may have been disclosed with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in non-conformance of the process or structure to the illustrated embodiment. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

## Claims

1. A white ink composition, comprising:
an ink vehicle comprising at least one compound chosen from acrylate monomers, methacrylate monomers, acrylate oligomers and methacrylate oligomers;
at least one polyester resin that exhibits a crystalline structure at temperatures at or below a recrystallization temperature and that has a melting temperature below 120°C;
at least one photoinitiator;
a filler comprising at least one component chosen from clay fillers and silica fillers; and
at least one white colorant.

2. The composition of claim 1, wherein the polyester resin is in an amount ranging from about 1 weight % to about 10 weight %, relative to the total weight of the ink composition.

3. The composition of claim 1, wherein the polyester resin has a melting temperature ranging from about 40°C to about 100°C.

4. The composition of claim 1, wherein the polyester resin is a copolymer of one or more diacid monomers and one or more diol monomers, the diacid monomers being a substituted or unsubstituted, linear, branched or cyclic compound having 2 to 20 carbon atoms and the diol monomers being a substituted or unsubstituted, linear, branched or cyclic diol having 2 to 20 carbon atoms.

5. The composition of claim 1, wherein the polyester resin is a compound of Formulae 3 or 4: 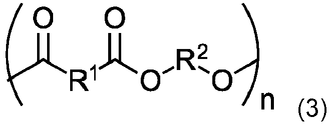 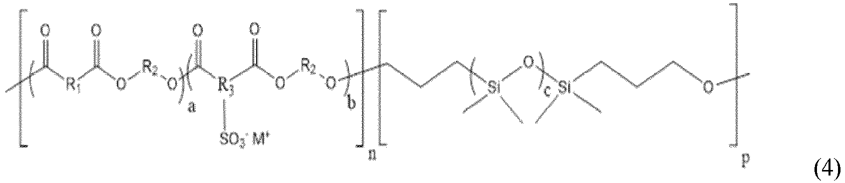 where M is a hydrogen or alkali metal, R₁ and R₃ are independently selected from the group consisting of aryl and alkyl; R₂ is independently selected from the group consisting of alkyl and oxyalkylene, and a, b, c, n and p represent the number of units of each segment.

6. A method for variable lithographic printing, comprising:
applying a dampening fluid to an imaging member surface;
forming a latent image by removing the dampening fluid from selective locations on the imaging member surface to form hydrophobic non-image areas and hydrophilic image areas;
developing the latent image by applying a white ink composition to the hydrophilic image areas; and
transferring the developed latent image to a receiving substrate,
the white ink composition comprising:
an ink vehicle comprising at least one compound chosen from acrylate monomers, methacrylate monomers, acrylate oligomers and methacrylate oligomers;
at least one polyester resin that exhibits a crystalline structure at temperatures at or below a recrystallization temperature and that has a melting temperature below 120°C;
at least one photoinitiator;
a filler comprising at least one component chosen from clay fillers and silica fillers; and
at least one white colorant.

7. The method of claim 6, wherein the polyester resin is in an amount ranging from about 1 weight % to about 10 weight %, relative to the total weight of the ink composition.

8. The method of claim 6, wherein the polyester resin has a melting temperature ranging from about 40°C to about 100°C.

9. The method of claim 6, wherein the polyester resin is a copolymer of one or more diacid monomers and one or more diol monomers, the diacid monomers being a substituted or unsubstituted, linear, branched or cyclic compound having 2 to 20 carbon atoms and the diol monomers being a substituted or unsubstituted, linear, branched or cyclic diol having 2 to 20 carbon atoms.

10. The method of claim 6, wherein the polyester resin is a compound of Formulae 3 or 4: 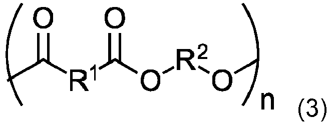 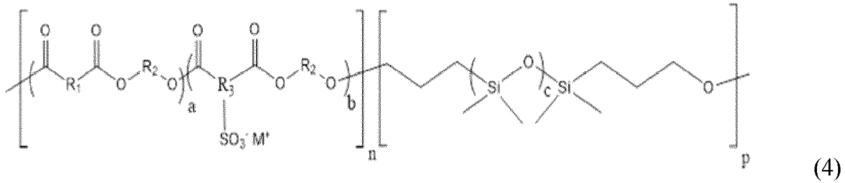 where M is a hydrogen or alkali metal, R₁ and R₃ are independently selected from the group consisting of aryl and alkyl; R₂ is independently selected from the group consisting of alkyl and oxyalkylene, and a, b, c, n and p represent the number of units of each segment.

## Patentansprüche

1. Weiße Tintenzusammensetzung, umfassend:
ein Tintenvehikel, umfassend mindestens eine Verbindung, gewählt aus Acrylatmonomeren, Methacrylatmonomeren, Acrylatoligomeren und Methacrylatoligomeren;
mindestens ein Polyesterharz, das bei Temperaturen bei oder unterhalb einer Umkristallisierungstemperatur eine kristalline Struktur aufzeigt und das eine Schmelztemperatur unterhalb von 120 °C aufweist;
mindestens einen Photoinitiator;
ein Füllmittel, umfassend mindestens einen Bestandteil, gewählt aus Ton-Füllstoffen und Siliciumdioxid-Füllstoffen, und
mindestens ein weißes Färbemittel.

2. Zusammensetzung nach Anspruch 1, wobei das Polyesterharz in einer Menge vorhanden ist, die von etwa 1 Gewichts-% bis etwa 10 Gewichts-% relativ zum Gesamtgewicht der Tintenzusammensetzung reicht.

3. Zusammensetzung nach Anspruch 1, wobei das Polyesterharz eine Schmelztemperatur aufweist, die von etwa 40 °C bis etwa 100 °C reicht.

4. Zusammensetzung nach Anspruch 1, wobei es sich bei dem Polyesterharz um ein Copolymer aus einem oder mehreren Disäure-Monomeren und einem oder mehreren Diol-Monomeren handelt, wobei es sich bei den Disäure-Monomeren um eine substituierte oder unsubstituierte, lineare, verzweigte oder zyklische Verbindung mit 2 bis 20 Kohlenstoffatomen handelt und es sich bei den Diol-Monomeren um einen substituierten oder unsubstituierten, linearen, verzweigten oder zyklischen Diol mit 2 bis 20 Kohlenstoffatomen handelt.

5. Zusammensetzung nach Anspruch 1, wobei es sich bei dem Polyesterharz um eine Verbindung der Formeln 3 oder 4 handelt: 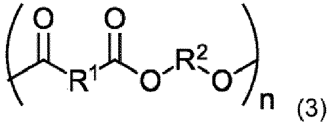 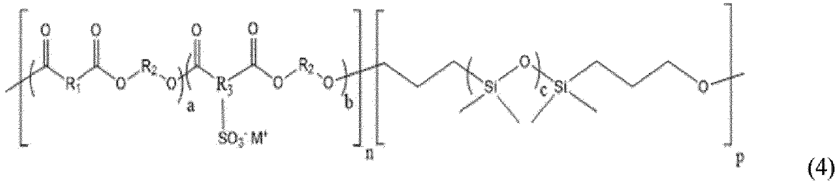 wobei M ein Wasserstoff oder Alkalimetall ist, R₁ und R₃ unabhängig ausgewählt sind aus der Gruppe, bestehend aus Aryl und Alkyl; R₂ unabhängig ausgewählt ist aus der Gruppe, bestehend aus Alkyl und Oxyalkylen, und a, b, c, n, und p die Anzahl der Einheiten jeden Abschnitts bedeuten.

6. Verfahren zum variablen lithografischen Drucken, umfassend:
Auftragen eines Feuchtmittels auf eine Bilderzeugungselement-Oberfläche;
Bilden eines latenten Bildes durch Entfernen des Feuchtmittels von ausgewählten Orten auf der Bilderzeugungselement-Oberfläche, um hydrophobe Nichtbildbereiche und hydrophile Bildbereiche zu bilden;
Entwickeln des latenten Bildes durch Auftragen einer weißen Tintenzusammensetzung auf die hydrophilen Bildbereiche und
Übertragen des entwickelten latenten Bildes auf ein Empfängersubstrat,
wobei die weiße Tintenzusammensetzung umfasst:
ein Tintenvehikel, umfassend mindestens eine Verbindung, gewählt aus Acrylatmonomeren, Methacrylatmonomeren, Acrylatoligomeren und Methacrylatoligomeren;
mindestens ein Polyesterharz, das bei Temperaturen bei oder unterhalb einer Umkristallisierungstemperatur eine kristalline Struktur aufzeigt und das eine Schmelztemperatur unterhalb von 120 °C aufweist;
mindestens einen Photoinitiator;
ein Füllmittel, umfassend mindestens einen Bestandteil, gewählt aus Ton-Füllstoffen und Siliciumdioxid-Füllstoffen und
mindestens ein weißes Färbemittel.

7. Verfahren nach Anspruch 6, wobei das Polyesterharz in einer Menge vorhanden ist, die von etwa 1 Gewichts-% bis etwa 10 Gewichts-% relativ zum Gesamtgewicht der Tintenzusammensetzung reicht.

8. Verfahren nach Anspruch 6, wobei das Polyesterharz eine Schmelztemperatur aufweist, die von etwa 40 °C bis etwa 100 °C reicht.

9. Verfahren nach Anspruch 6, wobei es sich bei dem Polyesterharz um ein Copolymer aus einem oder mehreren Disäure-Monomeren und einem oder mehreren Diol-Monomeren handelt, wobei es sich bei den Disäure-Monomeren um eine substituierte oder unsubstituierte, lineare, verzweigte oder zyklische Verbindung mit 2 bis 20 Kohlenstoffatomen handelt und es sich bei den Diol-Monomeren um einen substituierten oder unsubstituierten, linearen, verzweigten oder zyklischen Diol mit 2 bis 20 Kohlenstoffatomen handelt.

10. Verfahren nach Anspruch 6, wobei es sich bei dem Polyesterharz um eine Verbindung der Formeln 3 oder 4 handelt: 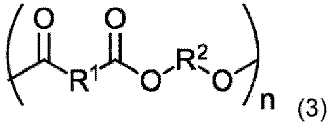 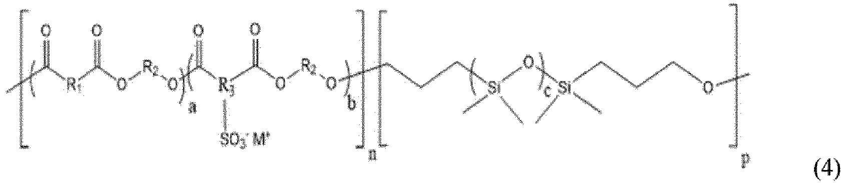 wobei M ein Wasserstoff oder Alkalimetall ist, R₁ und R₃ unabhängig ausgewählt sind aus der Gruppe, bestehend aus Aryl und Alkyl; R₂ unabhängig ausgewählt ist aus der Gruppe, bestehend aus Alkyl und Oxyalkylen, und a, b, c, n, und p die Anzahl der Einheiten jeden Abschnitts bedeuten.

## Revendications

1. Composition d'encre blanche comprenant :
un véhicule d'encre comprenant au moins un composé choisi parmi les monomères d'acrylate, les monomères de méthacrylate, les oligomères d'acrylate et les oligomères de méthacrylate ;
au moins une résine de polyester qui présente une structure cristalline à des températures égales ou inférieures à la température de recristallisation et qui a un point de fusion inférieur à 120°C ;
au moins un photoamorceur ;
une charge comprenant au moins un composant choisi parmi les charges de type argile et les charges de type silice ; et
au moins un colorant blanc.

2. Composition selon la revendication 1, dans laquelle la résine de polyester est présente en une quantité située dans la plage allant d'environ 1 % en poids à environ 10 % en poids par rapport au poids total de la composition d'encre.

3. Composition selon la revendication 1, dans laquelle la résine de polyester a un point de fusion situé dans la plage allant d'environ 40°C à environ 100°C.

4. Composition selon la revendication 1, dans laquelle la résine de polyester est un copolymère d'un ou plusieurs monomères de diacide et d'un ou plusieurs monomères de diol, les monomères de diacide étant un composé linéaire, ramifié ou cyclique, substitué ou non substitué, ayant 2 à 20 atomes de carbone, et les monomères de diol étant un diol linéaire, ramifié ou cyclique, substitué ou non substitué, ayant 2 à 20 atomes de carbone.

5. Composition selon la revendication 1, dans laquelle la résine de polyester est un composé de formule 3 ou 4 : 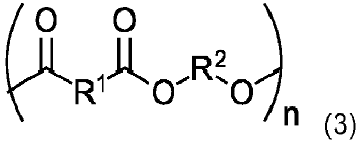 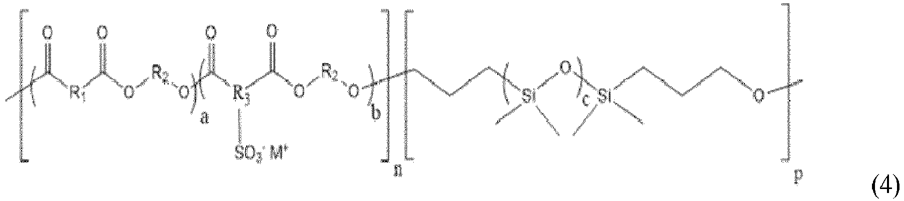 où M est un hydrogène ou un métal alcalin, R₁ et R₃ sont indépendamment choisis dans l'ensemble constitué par aryle et alkyle ; R₂ est indépendamment choisi dans l'ensemble constitué par alkyle et oxyalkylène, et a, b, c, n et p représentent les nombres de motifs de chaque segment.

6. Procédé d'impression lithographique variable comprenant :
l'application d'un fluide amortisseur sur une surface d'élément de formation d'image ;
la formation d'une image latente par élimination du fluide d'amortissement sur des emplacements sélectifs de la surface d'élément de formation d'image pour former des zones sans image hydrophobes et des zones d'image hydrophiles ;
le développement de l'image latente par application d'une composition d'encre blanche aux zones d'image hydrophiles ; et
le transfert de l'image latente développée sur un substrat récepteur,
la composition d'encre blanche comprenant :
un véhicule d'encre comprenant au moins un composé choisi parmi les monomères d'acrylate, les monomères de méthacrylate, les oligomères d'acrylate et les oligomères de méthacrylate ;
au moins une résine de polyester qui présente une structure cristalline à des températures égales ou inférieures à la température de recristallisation et qui a un point de fusion inférieur à 120°C ;
au moins un photoamorceur ;
une charge comprenant au moins un composant choisi parmi les charges de type argile et les charges de type silice ; et
au moins un colorant blanc.

7. Procédé selon la revendication 6, dans lequel la résine de polyester est présente en une quantité située dans la plage allant d'environ 1 % en poids à environ 10 % en poids par rapport au poids total de la composition d'encre.

8. Procédé selon la revendication 6, dans lequel la résine de polyester a un point de fusion situé dans la plage allant d'environ 40°C à environ 100°C.

9. Procédé selon la revendication 6, dans lequel la résine de polyester est un copolymère d'un ou plusieurs monomères de diacide et d'un ou plusieurs monomères de diol, les monomères de diacide étant un composé linéaire, ramifié ou cyclique, substitué ou non substitué, ayant 2 à 20 atomes de carbone, et les monomères de diol étant un diol linéaire, ramifié ou cyclique, substitué ou non substitué, ayant 2 à 20 atomes de carbone.

10. Procédé selon la revendication 6, dans lequel la résine de polyester est un composé de formule 3 ou 4 : 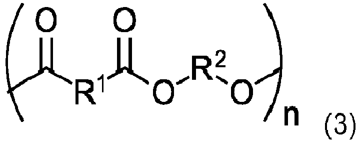 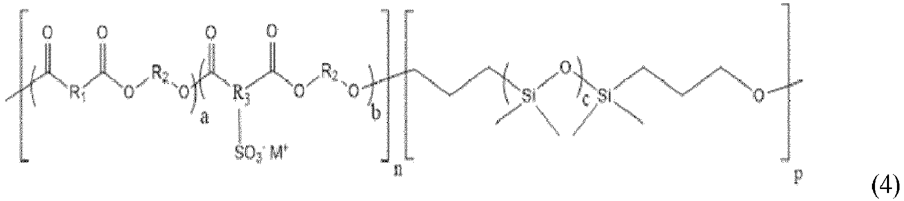 où M est un hydrogène ou un métal alcalin, R₁ et R₃ sont indépendamment choisis dans l'ensemble constitué par aryle et alkyle ; R₂ est indépendamment choisi dans l'ensemble constitué par alkyle et oxyalkylène, et a, b, c, n et p représentent les nombres de motifs de chaque segment.
